# EUROPÄISCHE PATENTSCHRIFT

(11) **EP 3 233 262 B1**
(45) Veröffentlichungstag und Bekanntmachung des Hinweises auf die Patenterteilung: **30.09.2020**
(21) Anmeldenummer: 15816125.7
(22) Anmeldetag: 14.12.2015
(51) Int. Cl.: B01J 8/20, B01J 37/02, B01J 37/34, B01J 21/04, B01J 23/42, B01J 35/00, B01J 35/02, B01J 35/08, C09K 5/06, F28D 20/02

(54) **KATALYSATORTRÄGER, KREISLAUFREAKTOR UND VERFAHREN ZUR FREISETZUNG VON WASSERSTOFF**
CATALYST SUPPORT, RECYCLE REACTOR AND METHOD FOR RELEASING HYDROGEN
SUPPORT DE CATALYSEUR, RÉACTEUR CYCLIQUE ET PROCÉDÉ DE LIBÉRATION D'HYDROGÈNE

(30) Priorität: 17.12.2014 DE 102014226282
(43) Veröffentlichungstag der Anmeldung: 25.10.2017
(73) Patentinhaber: Fraunhofer-Gesellschaft zur Förderung der angewandten Forschung e.V., 80686 München (DE)
(72) Erfinder: HORNUNG, Andreas, 76185 Karlsruhe (DE); BINDER, Samir, 92278 Illschwang (DE)
(86) Internationale Anmeldenummer: PCT/EP2015/079622
(87) Internationale Veröffentlichungsnummer: WO 2016/096744

(56) Entgegenhaltungen:
- WO-A2-2014/013440

## Beschreibung

### Technisches Gebiet der Erfindung

Die Erfindung betrifft einen Katalysatorträger mit einem inneren Kern, welcher zumindest ein Phasenwechselmaterial enthält oder daraus besteht einer Hüllschicht um den inneren Kern, welche zumindest ein Metalloxid enthält und einer katalytisch aktiven Schicht, welche in Zwischenräumen der Hüllschicht und/oder auf der Hüllschicht aufliegend angeordnet ist, wobei in der katalytisch aktiven Schicht mindestens ein katalytisch aktiver Stoff enthalten ist. Weiterhin betrifft die Erfindung einen Kreislaufreaktor mit zumindest einem solchen Katalysatorträger und ein Verfahren zur Freisetzung von Wasserstoff aus einem chemischen Wasserstoffspeicher.

### Stand der Technik

WO 2014/013440 offenbart ein Verbundstoffmaterial aus einem Katalysator-/Phasenübergangsmaterial. Wasserstoff wird als Alternative zu fossilem Treibstoff erprobt, wobei eine große Herausforderung in der Speicherung und Freisetzung des Wasserstoffs besteht. Ein vielversprechender Ansatz ist die Nutzung von regenerierbaren, flüssigen Wasserstoffträgermaterialien (Sobota, M., Nikiforidis, I., Amende, M., Zanón, B. S., Staudt, T., Höfert, 0., Lykhach, Y., Papp, C., Hieringer, W., Laurin, M., Assenbaum, D., Wasserscheid, P., Steinrück, H.-P., Görling, A. und Libuda, J. (2011), Dehydrogenation of Dodecahydro-N-ethylcarbazole on Pd/Al2O3 Model Catalysts. Chem. Eur. J., 17:11542-11552. doi: 10.1002/chem.201101311). Flüssige Wasserstoffträgermaterialien werden auch in der DE 10 2008 034 221 A1 und der EP 1 475 349 A2 beschrieben.

Für die Speicherung von Wasserstoff in flüssigen Wasserstoffträgermaterialien wird eine chemische Substanz benötigt, die einen reversiblen energiereichen und energiearmen Zustand annehmen kann. Dies passiert durch katalytische Hydrierung und Dehydrierung der Substanz. Eine Substanz, die für diese Reaktionen vorteilhaft verwendet werden kann, kann somit als Wasserstoffspeicher dienen (Teichmann, D., Arlt, W., Wasserscheid, P., Freymann, R.: A future energy supply based on Liquid Organic Hydrogen Carriers (LOHC); Energy & Environmental Science, Issue 8, 2011).

Bei den dem Stand der Technik bekannten LOHC-Systemen handelt es sich in der Regel um Stoffpaare, bei denen der energiearme Stoff A eine hochsiedende, funktionalisierte, aromatische Verbindung darstellt, die im energetischen Beladungsvorgang hydriert wird. Ein Beispiel betrifft die Verwendung des Stoffpaares N-Ethylcarbazol/Perhydro-N-Ethylcarbazol, bei dem die energetische Beladung typischerweise bei rund 140°C und erhöhten Drücken und die energetische Entladung bei Temperaturen zwischen 230 und 250°C durchgeführt werden kann.

Der energiereiche Stoff Perhydro-N-Ethylcarbazol besitzt im genannten System eine Wasserstoff-Kapazität von rund 6 Massen-% Wasserstoff. So reicht die im freisetzbaren Wasserstoff gespeicherte Energie von 100 kg Perhydro-N-Ethylcarbazol aus, um ein Kraftfahrzeug etwa 500 km zu bewegen, wobei bei der energetischen Nutzung an Bord fast ausschliesslich Wasserdampf als Verbrennungsprodukt gebildet wird. Damit stellt der Ansatz eine technisch interessante Alternative zu anderen Energiespeicherkonzepten für mobile Anwendungen dar.

Eine für diese Anwendung ebenfalls interessante Klasse bilden Wärmeüberträgeröle wie zum Beispiel Dibenzyltoluol, die bei Temperaturen über 260°C katalytisch hydriert werden können. Solche Stoffe sind aus Brückner, N., Obesser, K., Bösmann,A., Teichmann, D., Arlt, W., Dungs, J. und Wasserscheid, P. (2014), Evaluation of Industrially Applied Heat-Transfer Fluids as Liquid Organic Hydrogen Carrier Systems. ChemSusChem, 7: 229-235. doi: 10.1002/cssc.201300426 bekannt.

Die Dehydrierung von flüssigen Wasserstoffträgermaterialien erfolgt katalytisch bei Temperaturen von über 260°C. Der dabei freigesetzte Wasserstoff kann zum Beispiel in einer Brennstoffzelle oder in einem Verbrennungsmotor energetisch genutzt werden. Erfolgt die Wasserstofffreisetzung an Bord eines Fahrzeugs, kann der dabei bereit gestellte Wasserstoff direkt zum Betrieb des Fahrzeugs genutzt werden. Ein Problem bei der katalytischen Dehydrierung der flüssigen Wasserstoffträgermaterialien ist eine energieeffiziente und gleichmäßige Beheizung der Katalysatoren, sowie das Inkontaktbringen der Katalysatoren mit den Reaktanden bei einer für die Umsetzung optimalen Temperatur.

In Reaktionssystemen zur Dehydrierung solcher Wasserstoffträger bereitet das effiziente Einbringen von Wärme in den Reaktor Schwierigkeiten, da die Wärme über relativ große Distanzen von schlecht wärmeleitenden Medien an den Reaktionsort transportiert werden muss. Weiterhin muss bei dem Temperaturmanagement darauf geachtet werden, dass sich an der Oberfläche der Katalysatoren keine Hot Spots bilden, die zur teilweisen Deaktivierung des Katalysators führen können.

Die genannten Schwierigkeiten bei der Wärmeeinkopplung wirken sich insbesondere auf das Kaltstart-Verhalten und die Dynamik des Wasserstofffreisetzungsapparats aus und behindern dessen Verwendung in mobilen und dynamischen Anwendungsfällen wie z. B. für die Verwendung in Kraftfahrzeugen.

Weiter ist in der Regel eine Beheizung der gesamten Menge an flüssigem Wasserstoffträger in einem Tank nötig, um eine optimale Reaktionstemperatur an den katalytisch aktiven Flächen zu gewährleisten. Zu diesem Zweck müssen hohe Energiemengen aufgewendet werden, die in dem größten Teil der Flüssigkeit, welche sich nicht in unmittelbarer Umgebung eines Katalysators befindet, nicht zu einer Erhöhung der Reaktionsgeschwindigkeit beitragen können und somit die Energieeffizienz vermindern.

Daher ist es ausgehend von dem vorliegenden Stand der Technik Aufgabe der vorliegenden Erfindung, einen Reaktor und einen Katalysatorträger als Bestandteil des Reaktors zur Freisetzung von Wasserstoff bereitzustellen, welche sich durch ein verbessertes Wärmemanagement und eine bessere Energieeffizienz auszeichnen. Weiterhin soll ein vorteilhaftes Verfahren zur Freisetzung von Wasserstoff aus einem chemischen Wasserstoffspeicher bereitgestellt werden.

### Gegenstand der Erfindung

Die oben genannten Aufgaben werden durch einen Katalysatorträger nach Anspruch 1, einen Kreislaufreaktor nach Anspruch 16 und ein Verfahren nach Anspruch 18 gelöst.

Die Erfindung betrifft in einer Ausführungsform einen Katalysatorträger, mit einer katalytischen Schicht, umfassend zumindest einen inneren Kern, welcher zumindest ein Phasenwechselmaterial enthält oder daraus besteht, eine Hüllschicht um den inneren Kern, welche zumindest ein Metalloxid enthält oder daraus besteht, und eine katalytisch aktive Schicht, welche in Zwischenräumen der Hüllschicht und/oder auf der Hüllschicht aufliegend angeordnet ist, wobei in der katalytisch aktiven Schicht mindestens ein katalytisch aktiver Stoff enthalten ist, wobei der Katalysatorträger weiterhin eine Stützschicht aufweist, welche unterhalb der Hüllschicht angeordnet ist.

Dabei bildet die Stützschicht eine mechanisch stabile Hülle bzw. ein Gehäuse für den Katalysatorträger, so dass dieser beim Transport durch einen Kreislaufreaktor nicht beschädigt wird. Weiterhin sorgt die Stützschicht dafür, dass das Phasenwechselmaterial auch dann im Katalysatorträger eingeschlossen bleibt, wenn dieses flüssig oder gasförmig vorliegt.

Die äußerste Schicht bildet ein katalytisch aktiver Stoff, welcher die chemische Reaktion fördert, welche zur Dehydrierung des Wasserstoffträgers führt.

Die dazwischen liegende Hüllschicht kann dazu verwendet werden, die Haftfestigkeit der katalytisch aktiven Schicht zu verbessern, die Oberfläche der Stützschicht zu passivieren und/oder die Wärmeabgabe des Phasenwechselmaterial an der Oberfläche des Katalysatorträgers zu kontrollieren. In einigen Ausführungsformen der Erfindung kann die Hüllschicht daher ein Oxid enthalten, welches einerseits die Oxidation der Stützschicht verhindert und andrerseits eine geringe Wärmeleitfähigkeit aufweist, so dass mit zunehmender Schichtdicke die Wärmeabgabe zunehmend verlangsamt wird.

In einer Ausführungsform der Erfindung besitzt das im inneren Kern enthaltene Phasenwechselmaterial eine Phasenwechseltemperatur von weniger als etwa 500°C, oder weniger als etwa 400°C oder weniger als etwa 350°C.

In einer weiteren Ausführungsform der Erfindung weist der innere Kern eine elektrisch leitfähige innere Struktur auf. Dies erlaubt eine unmittelbare Beheizung des Phasenwechselmaterials durch ein elektrisches Wechselfeld, welches Wirbelströme im Inneren der elektrisch leitfähigen inneren Struktur erzeugt.

In einigen Ausführungsformen der Erfindung kann die elektrisch leitfähige innere Struktur zumindest einen Schwamm und/oder ein Gitter und/oder Partikel enthalten oder daraus bestehen, welche jeweils aus einem Metall oder einer Legierung gefertigt sind.

In einigen Ausführungsform des ersten Aspekts dieser Erfindung enthält das Phasenwechselmaterial im inneren Kern ein anorganisches Salz.

In einer Ausführungsform der Erfindung ist das in der Hüllschicht enthaltene Metalloxid elektrisch isolierend. Dies erlaubt es, eine im Inneren des Katalysatorträgers befindliche elektrisch leitfähige Struktur oder eine elektrisch leitfähige Stützschicht induktiv zu beheizen. In einigen Ausführungsformen der Erfindung wird die Hüllschicht als isolierend angesehen, wenn ihre elektrische Leitfähigkeit weniger als 10⁻⁷ S·m⁻¹ oder weniger als 10⁻⁸ S·m⁻¹ oder weniger als 10⁻⁹ S·m⁻¹ beträgt.

In einer Ausführungsform der Erfindung ist ein in der katalytisch aktiven Schicht enthaltener katalytisch aktiver Stoff ein Hydrierkatalysator für einen chemischen Wasserstoffspeicher und/oder ein in der katalytisch aktiven Schicht enthaltener katalytisch aktiver Stoff ist ein Dehydrierkatalysator für einen chemischen Wasserstoffspeicher.

In einer Ausführungsform der Erfindung ist der Katalysatorträger walzenförmig, hantelförmig, eiförmig oder kugelförmig.

In einigen Ausführungsformen der Erfindung weist ein kugelförmiger Katalysatorträger einen Durchmesser zwischen etwa 1 cm und etwa 10 cm oder zwischen etwa 1,5 cm und etwa 8 cm oder zwischen etwa 2 cm und etwa 6 cm auf. Diese Größe ist leicht herstellbar, im Kreislaufreaktor leicht transportierbar und weist eine ausreichende Wärmekapazität auf.

In einigen Ausführungsformen der Erfindung enthält die Stützschicht eine Stahllegierung oder besteht daraus. Dies erlaubt eine einfache Herstellung, da eine Hohlkugel aus Stahl durch Verschweißen leicht verschlossen werden kann, nachdem das Phasenwechselmaterial eingefüllt wurde. Weiterhin weist Stahl eine gute Wärmeleitfähigkeit auf und kann aufgrund seiner elektrischen Leitfähigkeit induktiv beheizt werden.

In einigen Ausführungsformen der Erfindung weist die Hüllschicht eine Dicke von etwa 10 µm bis etwa 5 mm oder eine Dicke von etwa 20 µm bis etwa 1 mm oder eine Dicke von etwa 30 µm bis etwa 100 µm oder eine Dicke von etwa 30 µm bis etwa 60 µm auf. Hierdurch lässt sich die Wärmeabgabe in einem weiten Bereich kontrollieren, so dass die Reaktion mit einer gewünschten Geschwindigkeit abläuft und das Auftreten von Hot Spots an der Oberfläche vermieden wird.

In einigen Ausführungsformen der Erfindung ist die katalytisch aktive Schicht als Teilbeschichtung ausgeführt. Somit kann durch den Bedeckungsgrad bzw. die Menge an katalytisch aktivem Material die Reaktionsgeschwindigkeit kontrolliert werden. In einigen Ausführungsformen der Erfindung kann die Teilbeschichtung zwischen etwa 5% und etwa 25% der Oberfläche des Katalysatorträgers bedecken.

In einigen Ausführungsformen der Erfindung kann die Hüllschicht Aluminiumoxid und/oder Siliciumoxid und/oder Titandioxid enthalten oder daraus bestehen.

In einigen Ausführungsformen der Erfindung kann die Oberfläche des Katalysatorträgers kalziniert sein. Dadurch kann die Lebensdauer des Katalysatorträgers verlängert sein.

Die Erfindung betrifft weiterhin einen Kreislaufreaktor, welcher zumindest ein Reservoir zur Aufnahme eines chemischen Wasserstoffspeichers enthält. Weiterhin enthält der Kreislaufreaktor zumindest einen Katalysatorträger, mit einer katalytischen Schicht, welcher vorstehend beschrieben wurde sowie eine Förderschnecke zum Einzug und Transport der Katalysatorträgers sowie eine Heizeinrichtung, mit welcher der zumindest eine Katalysatorträger erwärmbar ist. Durch Zufuhr erwärmter Katalysatorträger in das Reservoir zur Aufnahme des chemischen Wasserstoffspeichers läuft die Reaktion zur Dehydrierung sofort an der warmen Oberfläche der Katalysatorträger ab, ohne dass der gesamte Inhalt des Reservoirs erwärmt werden muss. Nach dem Entfernen der Katalysatorträger stoppt die Dehydrierung, so dass die Abgabe von gasförmigen Sauerstoff sehr rasch gesteuert bzw. geregelt werden kann. Durch das in den Katalysatorträgern enthaltene Phasenwechselmaterial und der darin gespeicherten latenten Wärme werden ein rasches Auskühlen und damit ein vorzeitiges Ende der Reaktion vermieden.

In einer Ausführungsform der Erfindung kann die Heizeinrichtung eine Induktionsheizung umfassen. Die berührungslose Induktionsheizung ist dabei energetisch vorteilhaft und leicht regelbar.

Die Erfindung betrifft weiter ein Verfahren zur Freisetzung von Wasserstoff aus einem chemischen Wasserstoffspeicher, umfassend zumindest das Erwärmen von Katalysatorträgern mit einer katalytischen Schicht, wie vorstehend beschrieben, die Zugabe der Katalysatorträger zu einem chemischen Wasserstoffspeicher und die katalytische Dehydrierung des Wasserstoffspeichers. Durch Zufuhr erwärmter Katalysatorträger in das Reservoir zur Aufnahme des chemischen Wasserstoffspeichers läuft die Reaktion zur Dehydrierung sofort an der warmen Oberfläche der Katalysatorträger ab, ohne dass der gesamte Inhalt des Reservoirs erwärmt werden muss. Daher ist das Verfahren energetisch vorteilhaft und weist nur geringe Regelverzögerungen bei wechselndem Bedarf an Wasserstoff, beispielsweise für motorische Anwendungen.In einigen Ausführungsformen der Erfindung kann der zumindest eine Katalysatorträger durch zumindest eine Förderschnecke zwischen Heizeinrichtung und Wasserstoffspeicher transportiert werden. Als Stetigförderer kann eine solche Förderschnecke den kontinuierlichen Transport der Katalysatorträger und damit eine kontinuierliche Wasserstofffreisetzung ermöglichen.

In einigen Ausführungsformen der Erfindung kann der Wasserstoffspeicher Perhydro-N-Ethylcarbazol oder Dibenzyltoluol enthalten oder daraus bestehen.

### Beschreibung der Erfindung

Beschrieben wird im Folgenden unter anderem ein Reaktor, der im industriellen Maßstab sehr energieeffizient die Dehydrierung von Wasserstoff ermöglicht. Grundlage bildet ein Kugelkreislaufreaktor (KKR), der bereits in anderen Anwendungen eingesetzt wird.

Der Kugelkreislaufreaktor ist ein Aggregat, das bisher in einem anderem Zusammenhang zur fraktionierten thermischen Zersetzung von Kunststoffgemischen entwickelt wurde (unter anderem beschrieben in Hornung, A.: Entwicklung eines Verfahrens zur fraktionierten thermischen Zersetzung von Kunststoffgemischen, Dissertation, Kaiserslautern, sowie in der deutschen Patentanmeldung DE 19620721).

Durch die eingebaute Förderschnecke werden in diesem Reaktor Kugeln sowie das umgebende viskose Medium im Kreis gefördert. Hierdurch können chemische Reaktionen in dünnen Filmen auf der Kugeloberfläche ablaufen. Die Förderung der Kugeln erfolgt in einer Heizzone. Die benötigte Energie wird mittels elektrischer Wand-, Boden-, Innenrohrheizung und Gaserhitzern bereitgestellt. Eine Verwendung eines solchen Reaktors für die Durchführung wärmesensitiver Reaktionen ist aus dem Stand der Technik nicht bekannt.

Gegenüber dem bekannten Stand der Technik wurde nun überraschenderweise gefunden, dass eine bestimmte Art von Katalysatorträgern als Bestandteil eines solchen Kreislaufreaktors die Energieeffizienz und das Wärmemanagement wärmesensitiver Reaktionen und vor allem von katalytischen Dehydrierungsreaktionen chemischer Wasserstoffspeicher erheblich verbessert.

Die erfindungsgemäßen Katalysatorträger umfassen zumindest einen inneren Kern, der zumindest ein Phasenwechselmaterial aufweist, eine Hüllschicht um den inneren Kern, welche zumindest ein Metalloxid aufweist, und eine katalytisch aktive Schicht, welche entweder in Zwischenräumen der Hüllschicht oder auf der Hüllschicht aufliegend vorgesehen ist, wobei in der katalytisch aktiven Schicht mindestens ein katalytisch aktiver Stoff enthalten ist.

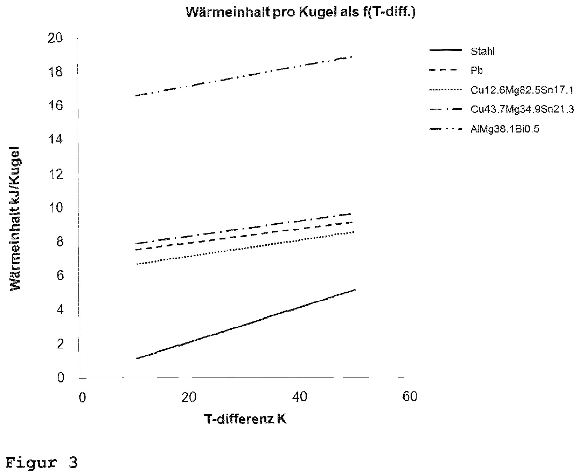

Die Katalysatorträger gemäß der vorliegenden Erfindung haben den Vorteil, dass deren innerer Kern, welcher zumindest ein Phasenwechselmaterial aufweist, sehr gut zur Wärmespeicherung geeignet ist und diese sehr kontrolliert nach außen an die Oberflächen der Katalysatorträger abgeben kann. Somit kann auch eine Überhitzung der Oberfläche der Katalysatorträger, die Bildung von Hot Spots und die damit einhergehende Inaktivierung des Katalysators an der Oberfläche vermieden werden. Abhängig von der Temperaturdifferenz bieten verschiedene PCM-Materialien deutliche Vorteile gegenüber dem Stand der Technik (siehe Abbildung 3). Die in Abbildung 3 gezeigten Ergebnisse wurden mit Kugeln eines Durchmessers von 3,7 cm erzielt. Die Ergebnisse lassen sich jedoch auch auf Kugeln mit anderen Durchmessern übertragen.

Die Katalysatorträger der vorliegenden Erfindung können jede denkbare Form haben. Vorzugsweise weisen die Katalysatorträger eine Form auf, die für eine Förderung innerhalb des erfindungsgemäßen Kreislaufreaktors geeignet ist. In einer Ausführungsform der vorliegenden Erfindung sind die Katalysatorträger walzenförmig, hantelförmig, eiförmig oder kugelförmig.

In einer weiteren Ausführungsform der vorliegenden Erfindung besitzt das Phasenwechselmaterial im inneren Kern eine Phasenwechseltemperatur, die in einem niedrigen Bereich liegt, beispielsweise bei höchstens etwa 550°C, oder bei höchstens etwa 500°C, oder bei höchstens etwa 400°C, oder bei höchstens etwa 350°C, oder bei höchstens etwa 300°C, oder bei höchstens etwa 250°C.

In einer Ausführungsform der vorliegenden Erfindung besitzt das Phasenwechselmaterial im inneren Kern eine Phasenwechseltemperatur von mindestens etwa 150°Coder von mindestens etwa 200°C, weiter oder von mindestens etwa 250°C, oder von mindestens etwa 300°C.

In einer Ausführungsform der vorliegenden Erfindung besitzt das Phasenwechselmaterial im inneren Kern eine Phasenwechseltemperatur von zwischen etwa 200°C und etwa 250°C.

Mit einem Phasenwechselmaterial, das eine solche Phasenwechseltemperatur besitzt, kann eine Wärmefreisetzung gewährleistet werden, die für eine optimale Reaktionstemperatur an der Oberfläche für den Katalysator sorgt. Auf diese Weise findet eine Wärmefreisetzung nur an der Oberfläche der Katalysatorträger statt, wodurch an dieser Oberfläche eine optimale Umgebung für den Ablauf der katalysierten Reaktion gewährleistet wird. Weiterhin unterbleibt eine überflüssige Erwärmung des flüssigen Reaktanden, der sich nicht in der Nähe der Katalysatorträger befindet.

Das Phasenwechselmaterial kann selbstverständlich je nach optimaler Reaktionstemperatur und verwendetem Katalysator im Hinblick auf eine dazu passende Phasenwechseltemperatur ausgewählt werden. Hier eignen sich Phasenwechselmaterialien mit Schmelztemperaturen Tₘ und Erstarrungstemperaturen Tf im benötigten Temperaturbereich am besten.

In einer Ausführungsform der vorliegenden Erfindung ist das Phasenwechselmaterial ein anorganisches Salz oder eine Kombination mehrerer anorganischer Salze. Mögliche Salze oder Kombinationen von Salzen für die Anwendung als Phasenwechselmaterial im Sinne der vorliegenden Erfindung sind LiNO₃ (Tₘ = 254°C), NaNO₂ (Tₘ = 282°C), NaNO₃ + NaCl (Tm = 282°C), KNO₃ + NaNO₃ (Tm = 290°C), NaNO₃ (Tm = 310°C), NaOH (Tm = 318°C), KNO₃ (Tm = 337°C) sowie MgCl₂ + NaCl + KCl (Tm = 385°C).

In einer anderen Ausführungsform werden metallische Phasenwechselmaterialien verwendet, wobei sich eutektische Systeme mit Schmelztemperaturen Tₘ und Erstarrungstemperaturen Tf im benötigten Temperaturbereich am besten eignen. Mögliche Systeme sind Cu-Mg-Sn (Eutektikum, stahlverträglich, Tₘ = 462°C; Tf = 459°C) und Al-Mg-Bi (Eutektikum, nicht stahlverträglich, Tₘ = 522°C; Tf = 521°C). In einer Ausführungsform ist das Phasenwechselmaterial eine Legierung aus Cu-Mg-Sn.

In einigen Ausführungsformen der Erfindung können Metalle oder Legierungen als Phasenwechselmaterial eingesetzt werden. Diese Phasenwechselmaterialien weisen ein verbessertes Temperaturhaltevermögen und ein höheres Wärmespeichervermögen gegenüber Stahlvollkugeln auf (vgl. Abbildung 3).

In einer anderen Ausführungsform weist der innere Kern eine Metalllegierung, ein anderes elektrisch leitfähiges Material oder eine metallisch Leitende innere Struktur auf. In einer weiter Ausführungsform ist die Metalllegierung, ein anderes elektrisch leitfähiges Material oder eine metallisch Leitende innere Struktur ein induktiv beheizbares Material.

Bei einer Beheizung durch Induktion wird Energie in Form eines elektromagnetischen Wechselfeldes auf das induktiv beheizbare Material übertragen und dort in Wärme umgewandelt. Das elektromagnetische Wechselfeld induziert in einem in der Nähe platzierten metallischen Material durch Induktion Wirbelströme, die das metallische Material durch den ohmschen Widerstand aufheizen. Die dabei übliche Frequenz liegt im Bereich von etwa 20 bis 50 kHz.

In einer weiter Ausführungsform ist die Metalllegierung, das andere elektrisch leitfähige Material oder die metallisch Leitende innere Struktur eine Legierung auf Basis von Eisen, Nickel, Cobalt oder Mangan, sowie weitere elektrisch leitende Legierungen, die ein Ankoppelverhalten bei induktiver Beheizung zeigen.

In einer weiteren Ausführungsform ist im inneren Kern der Katalysatorträger ein Metallschwamm oder ein Metallgitter vorgesehen. In einer anderen Ausführungsform kann ein Metall oder leitfähiges Material auch in Form eines Pulvers in dem Phasenwechselmaterial verteilt werden. Dieses Metall oder leitfähige Material kann durch Induktion berührungslos aufgeheizt werden und die Wärme an das Phasenwechselmaterial abgeben. Ein geeignetes Phasenwechselmaterial im Sinne der Erfindung kann die aufgenommene Wärme dann unter den für die Reaktion gewünschten Parametern passend nach außen abgeben.

Gemäß der vorliegenden Erfindung umfassen die Katalysatorträger weiterhin eine Hüllschicht um den inneren Kern, welche zumindest ein Metalloxid aufweist. Eine solche Hüllschicht ist zusätzlich um den Kern vorgesehen, um die Wärmeabgabe an die Oberfläche je nach den Anforderungen des Einsatzes der Katalysatorträger steuern und kontrollieren zu können. Die vorliegende Erfindung umfasst auch die Verwendung eines Metalloxidanteils als Teil der Hüllschicht eines Katalysatorträgers, der Katalysatorträger umfassend zumindest einen inneren Kern, der zumindest ein Phasenwechselmaterial aufweist, eine Hüllschicht um den inneren Kern, und eine katalytisch aktive Schicht, welche entweder in Zwischenräumen der Hüllschicht oder auf der Hüllschicht aufliegend vorgesehen ist, wobei in der katalytisch aktiven Schicht mindestens ein katalytisch aktiver Stoff enthalten ist, zur Regulierung der Freisetzung der im inneren Kern dieses Katalysatorträgers erzeugten Wärme an der Oberfläche der katalytisch aktiven Schicht.

Gemäß der vorliegenden Erfindung ist es somit auch bei großer Wärmeentwicklung im inneren Kern der Katalysatorträger möglich, die Wärmeabgabe an die Oberfläche durch eine Hüllschicht um den inneren Kern, welche ein Metalloxid aufweist, zu kontrollieren. In einer Ausführungsform der vorliegenden Erfindung ist das Metalloxid, welches in der Hüllschicht um den inneren Kern vorgesehen ist, nicht elektrisch leitfähig. In einer weiteren Ausführungsform der vorliegenden Erfindung ist das Metalloxid, welches in der Hüllschicht um den inneren Kern vorgesehen ist, nicht induktiv beheizbar.

Je nach den Anforderungen an die katalytische Reaktion und je nach Auswahl der Materialien des inneren Kerns ist der Fachmann aufgrund seines Fachwissens in der Lage ein geeignetes Material wie zum Beispiel ein Metalloxid für die Hüllschicht auszuwählen und eine geeignete Dicke dieser Hüllschicht zu wählen, um die gewünschte Abgabe der Wärme an die Oberfläche der Katalysatorträger zu erreichen.

In einer Ausführungsform ist die Hüllschicht eine Oxidkeramische Schicht, beispielsweise mit Anteilen an Chromoxid, Titanoxid, Calciumoxid, Siliziumoxid, Eisenodix Zirkoniumoxid, Aluminimoxid, Siliciumcarbid, Wolframcarbid.

In einer weiteren Ausführungsform beträgt die Dicke der Hüllschicht um den inneren Kern zwischen etwa 10 µm und etwa 5 mm, oder zwischen etwa 20 µm und etwa 100 um, oder zwischen etwa 40 µm und etwa 60 µm, oder etwa 50 µm.

In einer weiteren Ausführungsform kann zwischen der Hüllschicht und dem inneren Kern der Katalysatorträger eine Stützschicht vorgesehen sein. in einigen Ausführungsformen der Erfindung besteht eine solche Stützhülle aus Stahl oder einem anderen elektrisch leitenden Material, beispielsweise einem Metall oder einer Legierung.

Gemäß der vorliegenden Erfindung umfassen die Katalysatorträger weiterhin eine katalytisch aktive Schicht, welche entweder in Zwischenräumen der Hüllschicht oder auf der Hüllschicht aufliegend vorgesehen ist, wobei in der katalytisch aktiven Schicht mindestens ein katalytisch aktiver Stoff vorgesehen ist.

In einer Ausführungsform der vorliegenden Erfindung kann die Beschichtung aus Metalloxid mittels thermischen Spritzens, durch Schlickerguss oder aus Pulverslurry hergestellt werden. Anschließend kann die katalytisch aktive Schicht durch Imprägnieren, Sol-Gel-Verfahren oder Ionenaustausch aufgetragen werden.

In einer Ausführungsform der vorliegenden Erfindung ist die katalytisch aktive Schicht in Zwischenräumen der Hüllschicht vorgesehen. In einer weiteren Ausführungsform ist die katalytisch aktive Schicht ein integraler Bestandteil der Hüllschicht oder der mindestens eine katalytisch aktive Stoff ist in der Hüllschicht verteilt.

In einer weiteren Ausführungsform der vorliegenden Erfindung besitzt die Hüllschicht eine feste, raue Struktur. In einigen Ausführungsformen kann die Hüllschicht eine raue Oberfläche mit einer gemittelten Rauhtiefe R_{z} zwischen etwa 5µm und etwa 200µm, oder zwischen etwa 10µm und etwa 100µm, oder zwischen 20 und 30 µm aufweisen. Die Rauhtiefe R_{z} im Sinne dieser Erfindung wird nach DIN EN ISO 4768 bestimmt.

Ein solches Reaktionssystem weist erhebliche Vorteile für die Wasserstofffreisetzung aus flüssigen Verbindungen auf. Die Reaktionsfähigkeit des Reaktors ist sehr hoch und gleichzeitig gelingt durch die Rauigkeit der Materialoberfläche eine sehr leichte Ablösung des gebildeten Gases von der Katalysatoroberfläche. Das Reaktionssystem gemäß dieser Ausführungsform zeigt zudem deutliche Vorteile gegenüber dem Stand der Technik im Hinblick auf Druckverlust und Wärmeeinkopplung.

In einer Ausführungsform ist die katalytisch aktive Schicht auf der Hüllschicht aufliegend vorgesehen. Dies bedeutet, dass die Hüllschicht und die katalytisch aktive Schicht zwei diskrete Schichten sind. In einer Ausführungsform der vorliegenden Erfindung kann die katalytisch aktive Schicht unmittelbar auf der Hüllschicht aufliegend vorgesehen sein, alternativ können zwischen der Hüllschicht und der katalytisch aktiven Schicht eine oder mehrere Zwischenschichten vorhanden sein.

In einer Ausführungsform der Erfindung wird unter dem katalytisch aktiven Stoff ein Stoff verstanden, der die Reaktionsgeschwindigkeit durch die Senkung der Aktivierungsenergie einer chemischen Reaktion erhöht, ohne dabei selbst verbraucht zu werden. Der katalytisch aktive Stoff kann je nach dem Einsatzgebiet der Katalysatorträger ausgewählt werden. In einer Ausführungsform der vorliegenden Erfindung ist ein in der katalytisch aktiven Schicht enthaltener katalytisch aktiver Stoff ein Hydrierkatalysator für einen chemischen Wasserstoffspeicher.

Als Hydrierkatalysatoren im Sinne der vorliegenden Erfindung können Platin-Edelmetalle wie Palladium, Platin, Rhodium, Ruthenium oder Raney-Nickel eingesetzt werden. In einigen Ausführungsformen der Erfindung können als Hydrierkatalysator Ruthenium-haltige Katalysatoren eingesetzt werden. Als Trägermaterialien für die Katalysatoren können Metalloxide wie z.B. Al₂O₃, SiO₂ oder TiO₂ oder Aktivkohle verwendet werden.

Als Precursor zur Imprägnierung der Hüllschicht mit einem Hydrierkatalysator kann Ruthenium(III)chlorid oder Ruthenium(IV)oxid verwendet werden. Der Katalysator muss nach der Imprägnierung kalziniert werden. Metallkonzentrationen bis 5 gew% können für die Hydrierung der Wasserstoffträger verwendet werden.

In einer Ausführungsform der vorliegenden Erfindung ist ein in der katalytisch aktiven Schicht enthaltener katalytisch aktiver Stoff ein Dehydrierkatalysator für einen chemischen Wasserstoffspeicher.

Als Dehydrierkatalysatoren im Sinne der vorliegenden Erfindung werden Platin-Edelmetalle auf Trägern eingesetzt, meist Metalloxide. Der Dehydrierkatalysator kann ausgewählt sein aus Ruthenium, Rhodium, Palladium und/oder Platin als katalytisch aktive Komponente.

Die Aktivität der Edelmetalle im Hinblick auf die Dehydrierung steigt nach der Reihenfolge Rh<Ru<Pt<Pd an.

Die katalytisch aktiven Edelmetalle können durch Nassimprägnierung und anschließendes Kalzinieren auf die Metalloxide aufgetragen werden. Als Precursor zur Imprägnierung können Metallsalze verwendet werden, z.B. PdCl₂. In einigen Ausführungsformen der Erfindung können Metallkonzentrationen von weniger als 5 gew% für die Dehydrierung der Wasserstoffträger verwendet werden. Als Trägermaterialien eignen sich SiO₂ oder Al₂O₃.

In einer Ausführungsform der vorliegenden Erfindung basiert der chemische Wasserstoffspeicher auf N-Ethylcarbazol, in einer anderen Ausführungsform der vorliegenden Erfindung basiert der chemische Wasserstoffspeicher auf Dibenzyltoluol.

Die erfindungsgemäßen Katalysatorträger gemäß einer Ausführungsform können wie folgt hergestellt werden. Der Katalysatorträger enthält zumindest ein Phasenwechselmaterial, welches in einen Hohlkörper eingebettet ist. Das Phasenwechselmaterial bildet einen Latentwärmespeicher, welcher Wärme bei konstanter Temperatur aufnimmt oder abgibt. Der Hohlkörper ist mit einem katalytisch aktiven Material beschichtet. Das PCM-Material, beispielsweise eine Legierung aus Cu-Mg-Sn, wird in eine Hüllschicht, bestehend aus zwei hohlen Halbkugeln aus Stahl, gegossen. Die beiden Kugelhälften werden anschließend verschweißt (siehe hierzu auch W.-D. Steinmann: Latent Heat Storage for Solar Steam Systems, Journal of Solar Energy Engineering 130, 2008 sowie J.C. Portaspana: High temperature thermal energy storage systems based on latent and thermo-chemical heat storage, Master Thesis, Technische Universität Wien, Fakultät für Maschinenwesen und Betriebswissenschaften, 2001).

Das Verschließen der Kugeln kanndurch Schweißen unter Vakuum, oder durch Elektronenstrahlschweißen durchgeführt werden. Auf diese Weise erfolgt die Kapselung des Phasenwechselmaterials so, dass in der gefüllten Kugel ein Hohlraum verbleibt, der einen gewissen Druckaufbau ermöglicht, um Schrumpfung und Dehnung der Füllung aus Phasenwechselmaterial auszugleichen.

Als Stützhülle des Katalysatorträgers könnenStahlkugeln dienen, die beispielsweise über Blechumformung (Pressen, Schmieden, usw.) oder durch Beschichten von Styroporkugeln mit Pulver-Slurry und nachfolgendem Ausbrennen und Sintern hergestellt werden können. Die Phasenwechselmaterialien können bei der Herstellung des Katalysatorträgers als schmelzflüssige Legierung, Pulver oder Granulate in aufgeborte Stahlhohlkugeln gefüllt werden. Nach der Befüllung können die Kugeln in einem automatisierbaren Prozess verschweißt werden.

In einer alternativen Ausführungsform können Kugeln aus dem Phasenwechselmaterial geformt werden, die mittels thermischen Spritzens mit Metalloxidschichten von 50 µm bis 5 mm umhüllt werden. Die Herstellung der Phasenwechselmaterial-Kugeln kann auf verschiedenen Wegen erfolgen, beispielsweisedurch Gießen in Formen, Pressen von Formteilen (Vorstufen in Form von Draht-, Stababschnitten) oder Schmieden von Formteilen.

In einem kombinierten Verfahren können die Trägerkugeln aus mit Phasenwechselmaterial gefüllten und beidseitig verschlossenen/verschweißten Stahlzylindern durch Verformung hergestellt werden.

Vor der Auftragung der aktiven Katalysatorkomponente kann zunächst eine Hüllschicht aus Metalloxiden, z.B. SiO₂, Al₂O₃, TiO₂, durch thermisches Spritzen auf die Oberfläche der Kugel aufgebracht werden. Die Schichtdicke kann 50 µm bis 5 mm betragen. Anschließend kann die Kugel beispielsweise durch Nassimprägnierung mit katalytisch aktivem Material beschichtet werden. Vor der Anwendung kann die Kugel noch kalziniert werden, um die katalytisch aktiven Komponenten auf der Oberfläche zu fixieren.

Die Erfindung betrifft weiterhin einen Kreislaufreaktor, umfassend zumindest ein Reservoir zur Aufnahme eines chemischen Wasserstoffspeichers, Katalysatorträger gemäß dem ersten Aspekt der Erfindung, eine Förderschnecke zum Einzug und Transport der Katalysatorträger sowie Stäbe zur Führung und Erwärmung der Katalysatorträger während des Transports.

Ein ähnlicher Kugelkreislaufreaktor (KKR) wird bereits in anderen Anwendungen eingesetzt. Der Kugelkreislaufreaktor ist ein Aggregat, das ursprünglich in einem anderen Zusammenhang zur fraktionierten thermischen Zersetzung von Kunststoffgemischen entwickelt wurde. Der Aufbau und die Funktionsweise des Reaktors sind beschrieben in Hornung, A.: Entwicklung eines Verfahrens zur fraktionierten thermischen Zersetzung von Kunststoffgemischen, Dissertation, Kaiserslautern, sowie in der deutschen Patentanmeldung DE 19620721. Es wird hiermit auf den Offenbarungsgehalt dieser beiden Schriften für das Prinzip eines solchen Kugelkreislaufreaktors Bezug genommen. Eine Verwendung eines solchen Reaktors für die Durchführung wärmesensitiver Reaktionen ist aus dem Stand der Technik bisher nicht bekannt.

In einer Ausführungsform des erfindungsgemäßen Kreislaufreaktors der vorliegenden Erfindung handelt es sich um einen Kugelkreislaufreaktor. In einer weiteren Ausführungsform des erfindungsgemäßen Kreislaufreaktors der vorliegenden Erfindung handelt es sich bei der Förderschnecke um eine Kugelförderschnecke. In einer weiteren Ausführungsform des erfindungsgemäßen Kreislaufreaktors der vorliegenden Erfindung handelt es sich bei den Katalysatorträgern um kugelförmige Katalysatorträger gemäß des ersten Aspekts der vorliegenden Erfindung.

In einer Ausführungsform des erfindungsgemäßen Kreislaufreaktors der vorliegenden Erfindung handelt es sich um einen Kugelkreislaufreaktor, umfassend zumindest ein Reservoir zur Aufnahme eines chemischen Wasserstoffspeichers, kugelförmige Katalysatorträger gemäß einer Ausführungsform des ersten Aspekts der Erfindung, eine Kugelförderschnecke zum Einzug und Transport der kugelförmigen Katalysatorträger sowie Stäbe zur Führung und Erwärmung der kugelförmigen Katalysatorträger während des Transports.

Der Kreislaufreaktor gemäß der vorliegenden Erfindung umfasst ein Reservoir zur Aufnahme eines chemischen Wasserstoffspeichers. Der chemische Wasserstoffspeicher basiert gemäß einer Ausführungsform auf N-Ethylcarbazol, gemäß einer anderen Ausführungsform auf Dibenzyltoluol. In einer Ausführungsform ist das Reservoir zur Aufnahme des chemischen Wasserstoffspeichers nicht vollständig mit dem chemischen Wasserstoffspeicher gefüllt.

Weiterhin umfasst der Kugelkreislaufreaktor kugelförmige Katalysatorträger wie vorstehend beschrieben.

Außerdem umfasst der Kreislaufreaktor eine Förderschnecke zum Einzug und Transport der Katalysatorträger. Gemäß einer weiteren bevorzugten Ausführungsform ist die Förderschnecke so ausgebildet, dass sie die Katalysatorträger, welche von dem flüssigen chemischen Wasserstoffspeicher umgeben sind, einzieht und innerhalb des oder aus dem flüssigen chemischen Wasserstoffspeicher heraus transportiert. Gemäß einer weiteren Ausführungsform ist die Förderschnecke so ausgebildet, dass sie die Katalysatorträger, entgegen der Schwerkraft oder vertikal nach oben innerhalb des oder aus dem flüssigen chemischen Wasserstoffspeicher heraus transportiert.

Durch die eingebaute Förderschnecke werden in diesem Reaktor Katalysatorträger entgegen der Schwerkraft oder vertikal nach oben und somit im Kreis gefördert, wodurch die Reaktion im dünnen Film auf der Oberfläche des Katalysatorträgers stattfinden kann. Die Förderung der Katalysatorträger erfolgt in einer Heizzone. Die Förderung der Katalysatorträger kann in einer Führung erfolgen, welche nur im Bereich oberhalb der Flüssigkeit beheizt wird. Die Beheizung kann gemäß einer Ausführungsform durch elektrische Widerstandsheizung oder induktiv erfolgen. Der Kreislaufreaktor umfasst weiterhin Stäbe zur Führung und Erwärmung der Katalysatorträger während des Transports. Diese Stäbe können so ausgebildet sein, dass sie die Katalysatorträger während des Transports induktiv beheizen. Weiter kann in den Stäben des Kreislaufreaktors eine stromdurchflossene Spule vorgesehen sein, die ein magnetisches Wechselfeld erzeugt. Auf diese Weise ist es möglich, die Katalysatorträger während der Förderung zu beheizen, um an dem auf der Oberfläche der Katalysatorträger vorhandenen Katalysator eine optimale Reaktionstemperatur zu gewährleisten.

in einigen Ausführungsformen wird in dem erfindungsgemäßen Kreislaufreaktor das Wasserstoffträgermaterial bodenseitig eingefördert und ca. mittig ausgelassen. Der entstandene Wasserstoff kannim oberen Reaktorbereich oberhalb des Flüssigkeitsspiegels abgeführt werden.

Ein solcher Reaktor für die die Durchführung einer wärmesensitiven Reaktion besitzt gegenüber Rohrreaktoren erhebliche Vorteile, wie zum Beispiel eine sehr stabile Temperatur am Katalysator und damit hohe Umsatzraten, die Möglichkeit eines kontinuierlichen Betriebs des Reaktors, hohe Energieffizienz durch punktgenauen Einsatz der Energie zur Erwärmung, flexible Produktionsraten von erzeugtem Wasserstoff (z.B. für mobile Anwendungen, die große Schwankungen im Verbrauch aufweisen) und die Vermeidung von Hotspots an der katalytischen Schicht und somit keine thermische Zersetzung der flüssigen Wasserstoffträgermaterialien durch Nutzung der aufgenommenen Wärme für den Phasenwechsel.

Gemäß der vorliegenden Erfindung ist auch ein Verfahren zur Freisetzung von Wasserstoff aus einem chemischen Wasserstoffspeicher beansprucht, umfassend das Erwärmen der hierin beschriebenen Katalysatorträger, die Zugabe der Katalysatorträger zu einem chemischen Wasserstoffträger und die katalytische Dehydrierung des Wasserstoffspeichers.

In einer Ausführungsform kann das Verfahren auch zyklisch betrieben werden, wobei die Schritte des Verfahrens wiederholt ausgeführt werden. Hierbei werden die Katalysatorträger für einen Zeitraum in dem chemischen Wasserstoffträger zur katalytischen Dehydrierung des Wasserstoffspeichers belassen und anschließend wieder erwärmt, bevor sie erneut zu dem chemischen Wasserstoffträger hinzugegeben werden, um diesen katalytisch zu dehydrieren.

Die vorliegende Erfindung umfasst auch die Verwendung eines hierin beschriebenen Katalysatorträgers zur Durchführung einer wärmesensitiven Reaktion. Die besonderen Eigenschaften der hierin beschriebenen Katalysatorträger ermöglichen eine sehr genaue Kontrolle der Beheizung der Katalysatorträger sowie eine fein abgestufte Freisetzung der Wärme aus den Katalysatorträgern. Beides kann genau an die Anforderungen des jeweiligen Einsatzes für eine wärmesensitive Reaktion angepasst werden.

Weiterhin umfasst die vorliegende Erfindung auch die Verwendung eines hierin beschriebenen Kreislaufreaktors zur Durchführung einer wärmesensitiven Reaktion.

Auch die Merkmale des Kreislaufreaktors gemäß der vorliegenden Erfindung ermöglichen eine sehr genaue Kontrolle der Beheizung der Katalysatorträger und eine Steuerung der optimalen Reaktionsbedingungen für die wärmesensitive Reaktion.

Sämtliche Ausführungsformen der vorliegenden Erfindung wie hierin beschrieben werden als beliebig miteinander kombinierbar angesehen, insoweit der Fachmann eine solche Kombination als technisch sinnvoll ansehen könnte.

Die Erfindung wird nachfolgend anhand der beigefügten Zeichnungen näher erläutert, in der stark schematisiert Ausführungsbeispiele eines erfindungsgemäßen Reaktors sowie der Aufbau eines Katalysatorträgers dargestellt sind. Dabei bilden alle beschriebenen, in der Zeichnung dargestellten und in den Patentansprüchen beanspruchten Merkmale für sich genommen sowie in beliebiger Kombination miteinander den Gegenstand der Erfindung, unabhängig von ihrer Zusammenfassung in den Patentansprüchen und deren Rückbeziehung sowie unabhängig von ihrer Beschreibung bzw. Darstellung in der Zeichnung.

Es zeigt:

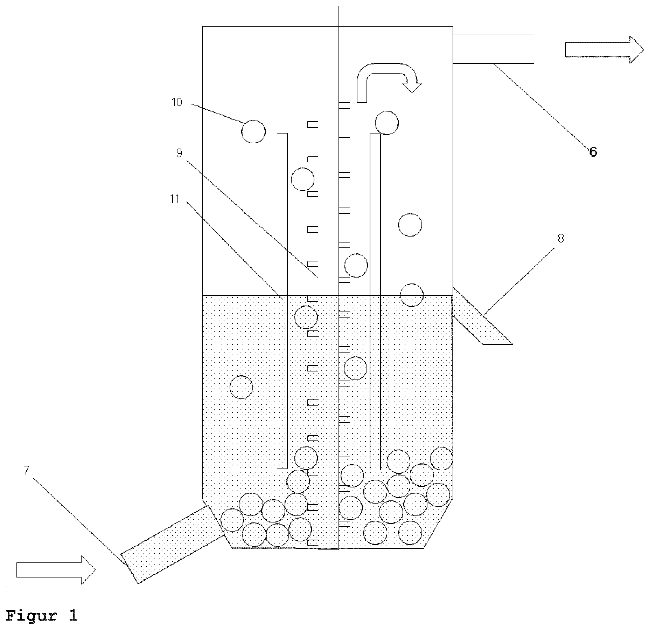

Abbildung 1 eine schematische Seitenansicht eines erfindungsgemäßen Reaktors gemäß eines Ausführungsbeispieles. Hierbei stehen die folgenden Bezugszeichen für die entsprechenden Teile der Abbildung:
- 10: katalytisch beschichtete und mit PCM befüllter Katalysatorträger
- 9: Förderschnecke
- 11: Führungsstäbe zur Beheizung
- 7: Einlass flüssiges Wasserstoffträgermaterial
- 8: Auslass flüssiges Wasserstoffträgermaterial
- 6: Wasserstoffauslass

Wie aus diesem Ausführungsbeispiel ersichtlich werden die Katalysatorträger 10 in der Führung zwischen der Förderschnecke 9 und den Führungsstäben zur Beheizung 11 vertikal nach oben und aus dem flüssigen Wasserstoffträgermaterial herausgefördert. In einigen Ausführungsformen werden die Katalysatorträger 10 bei der Förderung erst ab der Mitte der Führungsstäbe 11 beheizt, beispielsweise nur oberhalb des Spiegels des Wasserstoffträgermaterials innerhalb des Reaktors. In diesem Ausführungsbeispiel wird das flüssige Wasserstoffträgermaterial an einem Einlass 7 in einem unteren Bereich des Reaktors hineingepumpt. Das flüssige Wasserstoffträgermaterial kann in diesem Beispiel durch einen Auslass 8 in einem mittigen Bereich aus dem Reaktor herausfließen. Durch diesen Auslass 8 kann zu jeder Zeit eine gleichmäßige Menge und ein konstanter Spiegel des flüssigen Wasserstoffträgermaterials innerhalb des Reaktors vorgehalten werden.

Nach der Förderung aus dem flüssigen Material heraus können die Katalysatorträger 10 nun beheizt werden und nach der Förderung bis an den höchsten Punkt durch die Schwerkraft wieder in das flüssige Wasserstoffträgermaterial zurückkehren. Aufgrund der Beheizung und der kontinuierlichen Abgabe der Wärme an die Oberfläche der Katalysatorträger 10 sind über einen langen Zeitraum gute Reaktionsbedingungen gewährleistet. Durch die geeignete Wahl der Reaktorgröße, der Anzahl der Katalysatorträger 10, der Intensität der Beheizung durch die Führungsstäbe 11 und die Geschwindigkeit der Förderung können optimale Bedingungen und Wasserstoffausbeuten erzielt werden.

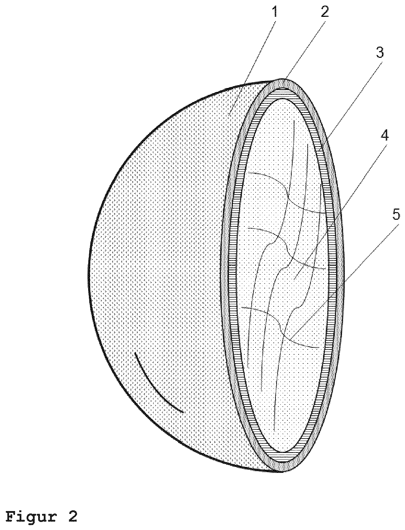

Abbildung 2 einen schematischen Schnitt eines erfindungsgemäßen Katalysatorträgers gemäß eines Ausführungsbeispiels. Hierbei stehen die folgenden Bezugszeichen für die entsprechenden Teile der Abbildung:
- 1: Katalytisch aktive Oberfläche
- 2: Hüllschicht
- 3: Stützschicht (optional)
- 4: Kern
- 5: Elektrisch leitende Struktur (optional)

Abbildung 3 eine Grafik zum Vergleich des Wärmeinhalts von Kugeln aus verschiedenen Eutektika und von herkömmlichen Stahlkugeln bei verschiedenen Temperaturen. Die dargestellten Ergebnisse wurden mit Kugeln eines Durchmessers von 3,7 cm erzielt.

### Ausführungsbeispiel

### Herstellung der Katalysatorträger

Zur Herstellung der Katalysatorträger wird zunächst die gewünschte Temperatur durch Wahl des Phasenwechselmaterials (PCM) festgelegt. Für den Bereich um 230°C wird das bleifreie Lot 95Sn5Sb gewählt. Das PCM-Material wird in eine Stützschicht, bestehend aus zwei hohlen Halbkugeln aus Stahl 1.4034 mit einem Außendurchmesser von 10mm, die über z. B. Blechumformung (Pressen, Schmieden etc.) hergestellt werden können.

Die PCM können bei der Herstellung des Katalysatorträgers als schmelzflüssige Legierung in die aufgebohrten Stahlhohlkugeln gefüllt werden. Nach der Befüllung werden die Kugeln in einem automatisierbaren Prozess verschweißt. Vor der Auftragung der aktiven Katalysatorkomponente wird zunächst eine Hüllschicht aus Al₂O₃ durch Thermisches Spritzen auf die Oberfläche der Kugel aufgebracht. Die Schichtdicke beträgt 50 µm. Anschließend wird durch Nassimprägnierung die Kugel mit katalytisch aktivem Material (ca. 5-Gew% Pt) beschichtet. Vor der Anwendung wird die Kugel kalziniert, um die katalytisch aktiven Komponenten auf der Oberfläche zu fixieren.

### Anwendung im Reaktor

Die oben beschriebenen Katalysatorträger werden in einem mit Dibenzyltoluol gefüllten Kugelkreislaufreaktor nach Abbildung 1 eingesetzt. Durch die eingebaute Förderschnecke werden die Kugeln im Kreis gefördert und oberhalb des Flüssigkeitsstandes induktiv aufgeheizt, so dass am Ende der Aufheizstrecke das gesamte PCM gerade geschmolzen ist.

Danach fallen die Katalysatorträger in die Flüssigkeit. Im Inneren beginnt der Erstarrungprozess des PCM bei konstanter Temperatur, die über die Stützschicht vergleichmässigt an die Hüll- und Katalysatorschicht abgegeben wird. Somit herrscht über den gesamten Absackvorgang der Kugel eine ideale Reaktionstemperatur an der Katalysatorschicht. Unten angekommen wird der Katalysatorträger wieder über die Förderschnecke nach oben gefördert und oberhalb des Flüssigkeitsstandes erneut erhitzt. Der freigesetzte Wasserstoff wird an der Reaktordecke abgezogen. Das Dibenzyltoluol kann wahlweise im Batch als auch kontinuierlich den Reaktor durchfließen.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Aus-führungsform der Erfindung vorhanden ist. Dies schließt die Anwesenheit weiterer Merkmale nicht aus. Sofern die Ansprüche und die vorstehende Beschreibung "erste" und "zweite" Merkmale oder Ausführungsformen definieren, so dient diese Bezeichnung der Unterscheidung zweier gleichartiger Merkmale oder Aus-führungsformen, ohne eine Rangfolge festzulegen.

## Patentansprüche

1. Katalysatorträger mit einer katalytischen Schicht, umfassend zumindest:
einen inneren Kern (4), welcher zumindest ein Phasenwechselmaterial enthält oder daraus besteht,
eine Hüllschicht (2) um den inneren Kern, welche zumindest ein Metalloxid enthält oder daraus besteht, und
eine katalytisch aktive Schicht (1), welche in Zwischenräumen der Hüllschicht (2) und/oder auf der Hüllschicht (2) aufliegend angeordnet ist, wobei in der katalytisch aktiven Schicht (1) mindestens ein katalytisch aktiver Stoff enthalten ist,
**dadurch gekennzeichnet, dass**
der Katalysatorträger weiterhin eine Stützschicht (3) aufweist, welche unterhalb der Hüllschicht (2) angeordnet ist.

2. Katalysatorträger mit einer katalytischen Schicht nach Anspruch 1, wobei das im inneren Kern (4) enthaltene Phasenwechselmaterial eine Phasenwechseltemperatur von weniger als etwa 500°C, oder weniger als etwa 400°C, oder weniger als etwa 350°C besitzt.

3. Katalysatorträger mit einer katalytischen Schicht nach Anspruch 1 oder 2, wobei der innere Kern (4) weiterhin eine elektrisch leitfähige innere Struktur (5) aufweist, insbesondere wobei die elektrisch leitfähige innere Struktur (5) zumindest einen Schwamm und/oder ein Gitter und/oder Partikel enthält oder daraus besteht, welche jeweils aus einem Metall oder einer Legierung gefertigt sind.

4. Katalysatorträger mit einer katalytischen Schicht nach einem der Ansprüche 1 bis 3, wobei das Phasenwechselmaterial ein anorganisches Salz oder eine Metalllegierung enthält oder daraus besteht.

5. Katalysatorträger mit einer katalytischen Schicht nach einem der Ansprüche 1 bis 4, wobei das in der Hüllschicht enthaltene Metalloxid elektrisch isolierend ist.

6. Katalysatorträger mit einer katalytischen Schicht nach einem der Ansprüche 1 bis 5, wobei ein in der katalytisch aktiven Schicht enthaltener katalytisch aktiver Stoff ein Hydrierkatalysator für einen chemischen Wasserstoffspeicher ist und/oder ein in der katalytisch aktiven Schicht enthaltener katalytisch aktiver Stoff ein Dehydrierkatalysator für einen chemischen Wasserstoffspeicher enthält.

7. Katalysatorträger mit einer katalytischen Schicht nach einem der Ansprüche 1 bis 6, wobei der Katalysatorträger die Form eines Zylinders, einer Hantel, einer Kugel oder eines Ellipsoides aufweist, insbesondere wobei ein kugelförmiger Katalysatorträger einen Durchmesser zwischen etwa 1 cm und etwa 10 cm oder zwischen etwa 1,5 cm und etwa 8 cm oder zwischen etwa 2 cm und etwa 6 cm aufweist.

8. Katalysatorträger mit einer katalytischen Schicht nach einem der Ansprüche 1 bis 7, **dadurch gekennzeichnet, dass** die Stützschicht eine Stahllegierung enthält oder daraus besteht.

9. Katalysatorträger mit einer katalytischen Schicht nach einem der Ansprüche 1 bis 8, **dadurch gekennzeichnet, dass** die Hüllschicht eine Dicke von etwa 10 µm bis etwa 5 mm oder eine Dicke von etwa 20 µm bis etwa 1 mm oder eine Dicke von etwa 30 µm bis etwa 100 µm oder eine Dicke von etwa 30 µm bis etwa 60 µm aufweist und/oder die Hüllschicht (2) Aluminiumoxid und/oder Siliciumoxid und/oder Titandioxid enthält oder daraus besteht.

10. Katalysatorträger mit einer katalytischen Schicht nach einem der Ansprüche 1 bis9, **dadurch gekennzeichnet, dass** die katalytisch aktiven Schicht (1) als Teilbeschichtung ausgeführt ist, insbesondere wobei die Teilbeschichtung zwischen etwa 5% und etwa 25% der Oberfläche des Katalysators bedeckt.

11. Katalysatorträger mit einer katalytischen Schicht nach einem der Ansprüche 1 bis 10, **dadurch gekennzeichnet, dass** die Oberfläche kalziniert ist.

12. Kreislaufreaktor, umfassend zumindest:
i) ein Reservoir zur Aufnahme eines chemischen Wasserstoffspeichers,
ii) einen Katalysatorträger mit einer katalytischen Schicht nach einem der Ansprüche 1 bis 11,
iii) eine Förderschnecke zum Einzug und Transport der Katalysatorträger,
iv) eine Heizeinrichtung, mit welcher der zumindest eine Katalysatorträger erwärmbar ist, insbesondere wobei die Heizeinrichtung eine Induktionsheizung umfasst.

13. Verfahren zur Freisetzung von Wasserstoff aus einem chemischen Wasserstoffspeicher, umfassend die folgenden Schritte:
I) Erwärmen von zumindest einem Katalysatorträger mit einer katalytischen Schicht nach einem der Ansprüche 1 bis 11 durch Induktionsheizung,
II) Zugabe der Katalysatorträger zu einem chemischen Wasserstoffspeicher,
III) katalytische Dehydrierung des Wasserstoffspeichers.

14. Verfahren nach Anspruch 13, **dadurch gekennzeichnet, dass** der zumindest eine Katalysatorträger durch zumindest eine Förderschnecke zwischen Heizeinrichtung und Wasserstoffspeicher transportiert wird.

15. Verfahren nach Anspruch 13 oder 14, **dadurch gekennzeichnet, dass** der Wasserstoffspeicher Perhydro-N-Ethylcarbazol oder Dibenzyltoluol enthält oder daraus besteht.

## Claims

1. Catalyst support having a catalytic layer, comprising at least:
an inner core (4), which contains or consists of at least one phase change material,
a cladding layer (2) around the inner core, which contains or consists of at least one metal oxide, and
a catalytically active layer (1), which is arranged in interspaces of the cladding layer (2) and/or such that it rests on the cladding layer (2), wherein at least one catalytically active substance is contained in the catalytically active layer (1),
**characterized in that**
the catalyst support further comprises a support layer (3), which is arranged below the cladding layer (2).

2. Catalyst support having a catalytic layer according to claim 1, wherein the phase change material contained in the inner core (4) has a phase change temperature of less than about 500°C, or less than about 400°C, or less than about 350°C.

3. Catalyst support having a catalytic layer according to claim 1 or 2, wherein the inner core (4) further has an electrically conductive inner structure (5), in particular the electrically conductive inner structure (5) containing or consisting of at least one sponge and/or a grid and/or particles, which are each made of a metal or an alloy.

4. Catalyst support having a catalytic layer according to any of claims 1 to 3, wherein the phase change material contains or consists of an inorganic salt or a metal alloy.

5. Catalyst support having a catalytic layer according to any of claims 1 to 4, wherein the metal oxide contained in the cladding layer is electrically insulating.

6. Catalyst support having a catalytic layer according to any of claims 1 to 5, wherein a catalytically active substance contained in the catalytically active layer is a hydrogenation catalyst for a chemical hydrogen storage and/or a catalytically active substance contained in the catalytically active layer contains a dehydrogenation catalyst for a chemical hydrogen storage.

7. Catalyst support having a catalytic layer according to any of claims 1 to 6, wherein the catalyst support has the shape of a cylinder, a dumbbell, a sphere or an ellipsoid, in particular a spherical catalyst support having a diameter of between about 1 cm and about 10 cm or between about 1.5 cm and about 8 cm or between about 2 cm and about 6 cm.

8. Catalyst support having a catalytic layer according to any of claims 1 to 7, **characterized in that** the support layer contains or consists of a steel alloy.

9. Catalyst support having a catalytic layer according to any of claims 1 to 8, **characterized in that** the cladding layer has a thickness of about 10 µm to about 5 mm or a thickness of about 20 µm to about 1 mm or a thickness of about 30 µm to about 100 µm or a thickness of about 30 µm to about 60 µm and/or the cladding layer (2) contains or consists of aluminum oxide and/or silicon oxide and/or titanium oxide.

10. Catalyst support having a catalytic layer according to any of claims 1 to 9, **characterized in that** the catalytically active layer (1) is designed as a partial coating, in particular the partial coating covering between about 5% and about 25% of the surface of the catalyst.

11. Catalyst support having a catalytic layer according to any of claims 1 to 10, **characterized in that** the surface is calcined.

12. Recycle reactor, comprising at least:
i) a reservoir for holding a chemical hydrogen storage,
ii) a catalyst support having a catalytic layer according to any of claims 1 to 11,
iii) a screw conveyor for the intake and transport of the catalyst supports,
iv) a heating device with which the at least one catalyst support can be heated, in particular the heating device comprising an induction heater.

13. Method for releasing hydrogen from a chemical hydrogen storage, comprising the following steps:
I) heating at least one catalyst support having a catalytic layer according to any of claims 1 to 11 by induction heating,
II) adding the catalyst supports to a chemical hydrogen storage,
III) catalytically dehydrogenating the hydrogen storage.

14. Method according to claim 13, **characterized in that** the at least one catalyst support is transported by at least one screw conveyor between the heating device and the hydrogen storage.

15. Method according to claim 13 or 14, **characterized in that** the hydrogen storage contains or consists of perhydro-N-ethylcarbazole or dibenzyltoluene.

## Revendications

1. Support de catalyseur ayant une couche catalytique, comprenant au moins :
un noyau intérieur (4) contenant ou constitué d'au moins un matériau à changement de phase,
une couche enveloppe (2) autour du noyau intérieur, qui contient ou est constituée d'au moins un oxyde métallique, et
une couche catalytiquement active (1), qui est disposée dans des espaces intermédiaires de la couche enveloppe (2) et/ou qui est appliquée sur la couche enveloppe (2), au moins une substance catalytiquement active étant contenue dans la couche catalytiquement active (1),
**caractérisé en ce que**
le support de catalyseur comprend en outre une couche de soutien (3) qui est disposée au-dessous de la couche enveloppe (2).

2. Support de catalyseur ayant une couche catalytique selon la revendication 1,
dans lequel le matériau à changement de phase contenu dans le noyau intérieur (4) possède une température de changement de phase inférieure à environ 500°C, ou inférieure à environ 400°C, ou inférieure à environ 350°C.

3. Support de catalyseur ayant une couche catalytique selon la revendication 1 ou 2,
dans lequel le noyau intérieur (4) comprend en outre une structure intérieure électriquement conductrice (5),
en particulier la structure intérieure électriquement conductrice (5) contient ou est constituée au moins d'une éponge et/ou d'une grille et/ou de particules qui sont réalisées chacune en un métal ou en un alliage.

4. Support de catalyseur ayant une couche catalytique selon l'une des revendications 1 à 3,
dans lequel le matériau à changement de phase contient ou est constitué d'un sel inorganique ou d'un alliage métallique.

5. Support de catalyseur ayant une couche catalytique selon l'une des revendications 1 à 4,
dans lequel l'oxyde métallique contenu dans la couche enveloppe est électriquement isolant.

6. Support de catalyseur ayant une couche catalytique selon l'une des revendications 1 à 5,
dans lequel une substance catalytiquement active contenue dans la couche catalytiquement active est un catalyseur d'hydrogénation pour une réserve chimique d'hydrogène, et/ou
une substance catalytiquement active contenue dans la couche catalytiquement active contient un catalyseur de déshydrogénation pour une réserve chimique d'hydrogène.

7. Support de catalyseur ayant une couche catalytique selon l'une des revendications 1 à 6,
dans lequel le support de catalyseur a la forme d'un cylindre, d'un haltère, d'une sphère ou d'un ellipsoïde,
en particulier un support de catalyseur sphérique présente un diamètre compris entre environ 1 cm et environ 10 cm ou entre environ 1,5 cm et environ 8 cm ou entre environ 2 cm et environ 6 cm.

8. Support de catalyseur ayant une couche catalytique selon l'une des revendications 1 à 7,
**caractérisé en ce que** la couche de soutien contient ou est constituée d'un alliage d'acier.

9. Support de catalyseur ayant une couche catalytique selon l'une des revendications 1 à 8,
**caractérisé en ce que** la couche enveloppe présente une épaisseur d'environ 10 µm à environ 5 mm ou une épaisseur d'environ 20 µm à environ 1 mm ou une épaisseur d'environ 30 µm à environ 100 µm ou une épaisseur d'environ 30 µm à environ 60 µm,
et/ou la couche enveloppe (2) contient ou est constituée d'oxyde d'aluminium et/ou d'oxyde de silicium et/ou de dioxyde de titane.

10. Support de catalyseur ayant une couche catalytique selon l'une des revendications 1 à 9,
**caractérisé en ce que** la couche catalytiquement active (1) est réalisée sous forme de revêtement partiel,
en particulier le revêtement partiel recouvre entre environ 5 % et environ 25 % de la surface du catalyseur.

11. Support de catalyseur ayant une couche catalytique selon l'une des revendications 1 à 10,
**caractérisé en ce que** la surface est calcinée.

12. Réacteur à circuit fermé comprenant au moins :
i) un réservoir pour recevoir une réserve chimique d'hydrogène,
ii) un support de catalyseur ayant une couche catalytique selon l'une des revendications 1 à 11,
iii) un convoyeur à vis sans fin pour l'admission et le transport des supports de catalyseur,
iv) un dispositif de chauffage permettant de chauffer au moins un support de catalyseur, en particulier le dispositif de chauffage comprenant un chauffage à induction.

13. Procédé pour libérer de l'hydrogène hors d'une réserve chimique d'hydrogène, comprenant les étapes suivantes consistant à :
I) chauffer au moins un support de catalyseur ayant une couche catalytique selon l'une des revendications 1 à 11 par chauffage à induction,
II) ajouter les supports de catalyseur à une réserve chimique d'hydrogène,
III) effectuer une déshydrogénation catalytique de la réserve d'hydrogène.

14. Procédé selon la revendication 13,
**caractérisé en ce que** ledit au moins un support de catalyseur est transporté par au moins un transporteur à vis sans fin entre le dispositif de chauffage et la réserve d'hydrogène.

15. Procédé selon la revendication 13 ou 14,
**caractérisé en ce que** le
la réserve d'hydrogène contient ou est constituée de perhydro-N-éthylcarbazole ou de dibenzyltoluène.
